# FASCICULE DE BREVET EUROPEEN

(11) **EP 0 922 885 B1**
(45) Date de publication et mention de la délivrance du brevet: **28.05.2003**
(21) Numéro de dépôt: 98402743.3
(22) Date de dépôt: 04.11.1998
(51) Int. Cl.: F16H 21/44, F16K 31/72, F16K 31/52, F16K 31/53

(54) **Mécanisme et procédé d'obtention d'un couple de manoeuvre**
Vorrichtung und Verfahren zur Erlangung eines Betätigungsmomentes
Mechanism and process for obtaining an operating torque

(30) Priorité: 10.12.1997 FR 9715610
(43) Date de publication de la demande: 16.06.1999
(73) Titulaire: KSB S.A.S, 92230 Gennevilliers (FR)
(72) Inventeur: Laulhe, René, 33140 Villenave d'Ornon (FR); Wattignier, Claude, 33400 Talence (FR)
(74) Mandataire: Eidelsberg, Victor Albert

(56) Documents cités:
- FR-A- 1 460 561
- US-A- 3 452 961
- US-A- 5 000 077

## Description

La présente invention se rapporte aux mécanismes et à un procédé d'obtention d'un couple de manoeuvre d'une pièce pour la faire tourner sur soi-même sur un quart de tour, à partir d'un organe se déplaçant suivant une trajectoire par l'intermédiaire d'une transmission.

Comme mécanisme de ce genre, notamment pour un actionneur de robinet papillon de grand diamètre, on connaît déjà le palonnier (scotch-yoke), le système bielle manivelle à arc-boutement, le pignon-crémaillère et la roue-vis tangente. Tous ces systèmes ont l'inconvénient de fournir un couple exagérément grand dans certaines phases de fonctionnement et de nécessiter ainsi un surdimensionnement de la commande de l'actionneur pour fournir le couple nécessaire à la manoeuvre dans toutes les positions.

L'invention pallie cet inconvénient par un mécanisme dans lequel la transmission est telle que la courbe représentative du coefficient démultiplicateur, qui est le rapport du couple de manoeuvre à un couple nominal, porté en ordonnées en fonction de l'angle de rotation, porté en abscisses, est convexe en tournant sa convexité vers le haut.

Grâce à cela, on peut adapter au mieux le couple fourni en fonction du couple nécessaire, économiser ainsi de l'énergie et ne pas avoir à prévoir de surdimensionnement.

Conformément à l'invention et à la partie caractérisante des revendications 1 et 7, le maximum du coefficient démultiplicateur est obtenu pour un angle de 20 à 40° et mieux de 28 à 37°.

Le brevet français n°1 460 561 mentionne expressément qu'il vise un mécanisme entraînant un arbre en rotation d'un quart de tour avec couple transmis croissant d'une façon continue d'une position extrême à l'autre position extrême.

Le brevet US 5 000 077, divulguant toutes les caractéristiques du préambule des revendications 1 et 7, propose d'entraîner un arbre 78 ou 178 à la figure 8 par un bras de levier 74 monté sur galets 82. Le brevet est absolument muet sur la variation du couple. Il apparaît clairement, par exemple de la figure 8, que l'on passe d'une position d'extrémité à l'autre en tournant de 90° avec une symétrie, en sorte que l'on n'obtiendra pas la courbe ayant un maximum entre 20 et 40° suivant l'invention.

Enfin, le brevet US 3 452 961 décrit bien un dispositif de commande d'actionneur à variation du couple, mais il propose lui aussi une variation continue du couple en indiquant que dans une position d'extrémité, il faut un grand couple et une vitesse petite et dans l'autre position d'extrémité un petit couple et une grande vitesse. Le couple varie de manière continue sans passer par un maximum.

Parmi les diverses transmissions qui donnent une courbe suivant l'invention, on préfère tout particulièrement celle dans laquelle l'organe se déplaçant suivant une trajectoire est un coulisseau sur lequel est monté, guidé dans une direction non parallèle à la trajectoire, un patin solidaire de la pièce montée à poste fixe avec possibilité de tourner. Par patin on entend également dans le présent mémoire, un galet roulant sur un rail et d'une manière générale, tout organe se déplaçant dans la direction non parallèle à la trajectoire. Cette solution permet d'utiliser toute source d'énergie qu'elle soit manuelle, électrique, pneumatique, hydraulique ou avec rappel par cartouches d'accumulation d'énergie. Le mécanisme est irréversible pour les solutions manuelles et électriques. L'irréversibilité des autres commandes est assurée par le maintien de la pression dans les vérins. L'agencement est très simple et utilise très peu de pièces.

Au dessin annexé, donné uniquement à titre d'exemple :
la figure 1 est un graphique illustrant l'invention,
les figures 2 et 3 sont deux schémas du mode de réalisation préféré de l'invention pour un actionneur de robinet, la figure 2 le représentant en position de fermeture et la figure 3 en position ouverte,
les figures 4 et 5 représentent, respectivement en position fermée et en position ouverte, un autre mode de réalisation de l'invention,
les figures 6 et 7 représentent une variante de l'invention, et
les figures 8, 9 et 10 représentent une autre variante de l'invention, alors que l'obturateur est en position fermée, en position ouverte et en position intermédiaire.

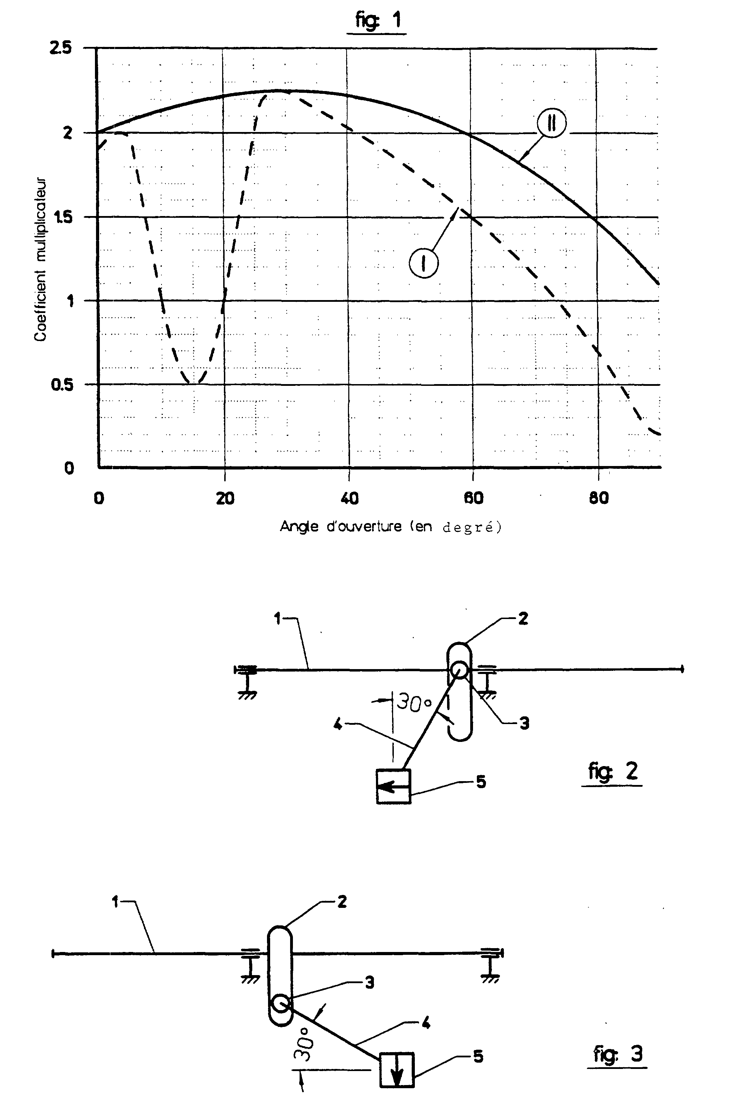

On a porté sur le graphique de la figure 1, les angles d'ouvertures en degré en abscisses et le coefficient démultiplicateur en ordonnées. Le coefficient démultiplicateur est le rapport du couple de manoeuvre à un couple nominal. C'est une valeur relative du couple fourni. A la courbe I, en pointillé de la figure 1, est représenté le couple nécessaire sur le robinet, tandis que la courbe II représente le couple donné par l'actionneur et donc fourni par le mécanisme suivant l'invention. On voit que ce couple, tel que représenté par la courbe II, croît lorsque l'angle d'ouverture passe de 0 à 30° environ, puis décroît lorsque l'angle d'ouverture passe de 30 à 90°. On voit ainsi que l'on peut faire coïncider le maximum de la courbe I avec le maximum de la courbe II et surtout, dans la partie des courbes correspondant à des angles d'ouverture compris entre 30 et 90°, que l'écart entre les deux courbes est réduit par rapport à ce qui serait obtenu si la courbe II était une droite parallèle à l'axe des abscisses, comme ce que l'on obtient avec un mécanisme pignon-crémaillère ou roue-vis tangente, et l'est encore bien davantage par rapport à un mécanisme palonnier (scotch-yoke) dans lequel la courbe tourne sa convexité vers le bas. Le mécanisme suivant l'invention est avantageux aussi par rapport à un système bielle manivelle à arc-boutement dans lequel le coefficient démultiplicateur est très élevé pour une valeur d'environ 2°, diminue beaucoup jusqu'à 15° environ, pour avoir ensuite une valeur sensiblement constante.

A la figure 2, une tringle 1 horizontale est déplacée en translation de la droite vers la gauche et inversement, par exemple par un moyen pneumatique. Cette tringle 1 porte un coulisseau 2 à l'intérieur duquel sont ménagées des rainures qui permettent à un patin 3 d'être guidé et de se déplacer en translation dans la direction verticale. Un bras 4 est articulé au patin 3 et est fixé à l'axe 5 de sortie d'un actionneur d'un obturateur de robinet, monté à poste fixe avec possibilité de tourner sur soi-même.

En la position de la figure 3, qui est la position ouverte d'extrémité, le bras 4 fait un angle de 30° avec la tringle 1 qui définit la trajectoire du coulisseau 2, en sorte qu'à la figure 2, qui représente l'autre position d'extrémité, le bras 4 fait un angle de 30° avec la verticale, cet angle de 30° correspondant à l'angle d'ouverture porté sur la figure 1.

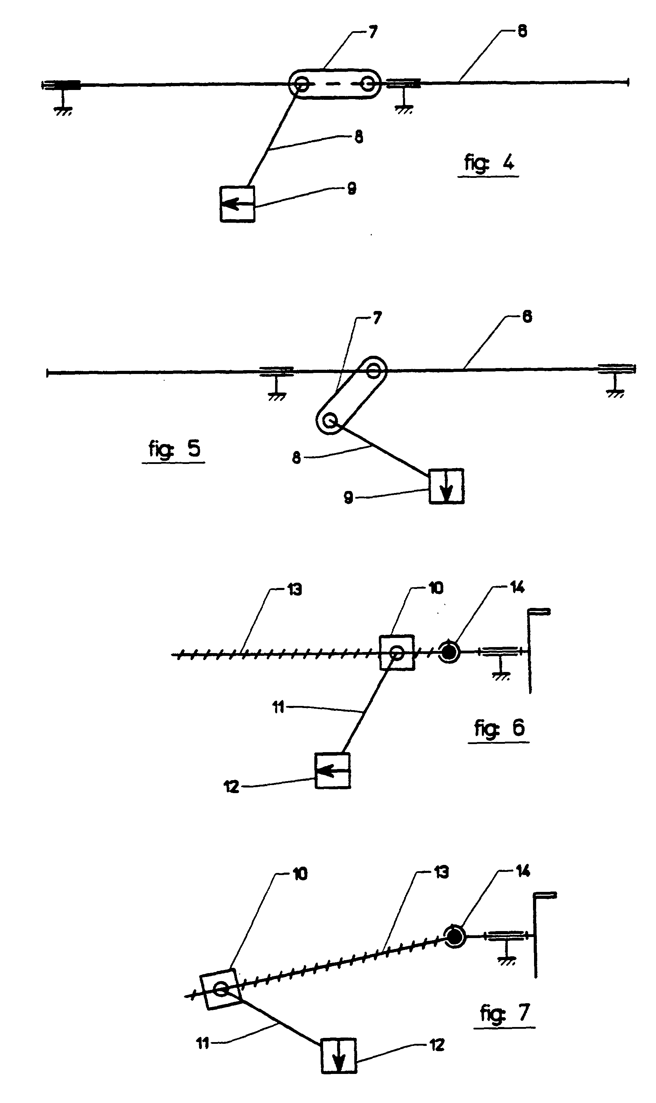

Aux figures 4 et 5, il est articulé à une tringle 6, susceptible de se déplacer horizontalement de droite à gauche puis de revenir, l'extrémité d'une bielle 7 à l'autre extrémité de laquelle est articulé un bras 8 solidaire d'une pièce 9.

Dans cette solution à bielle-manivelle, on obtient la rotation de la pièce 9 par la translation de la tringle 6 qui entraîne la bielle en rotation et en translation.

Aux figures 6 et 7, un coulisseau 10, auquel est articulé un bras 11 fixé à l'axe 12 de sortie de l'actionneur du robinet, peut se déplacer sur une vis 13 rotulée par une rotule 14. Quand la vis tourne, le coulisseau 10 se déplace sur la vis, cependant que celle-ci tourne autour de la rotule 14 de manière, comme dans les solutions précédentes, à diminuer le bras de levier du bras 11 sur l'axe 12 puis à l'augmenter.

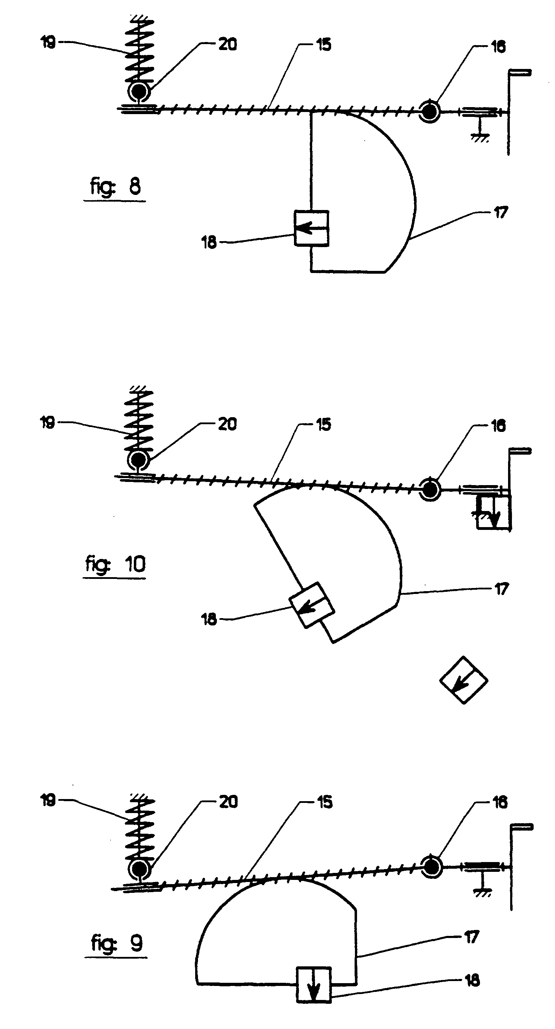

Enfin, dans la version suivant les figures 8 à 10, la vis rotulée 15, pouvant basculer par une rotule 16, coopère avec un pignon 17 en forme de came, lui-même solidaire de l'axe 18 d'actionneur du robinet. Un ressort 19 à rotule 20 maintien le contact entre la vis 15 et le pignon 17, tout en permettant à la vis 15 de basculer autour de la rotule 16.

Dans les variantes des figures 4 à 10, le bras ou l'équivalent du bras 4 des figures 2 et 3, fait, en une position d'extrémité, un angle de 30° avec l'équivalent de ce qui définit la trajectoire du coulisseau aux figures 2 et 3.

## Revendications

1. Mécanisme d'obtention d'un couple de manoeuvre d'un axe de sortie d'un obturateur de robinet pour le faire tourner sur soi-même d'un quart de tour, à partir d'un organe se déplaçant suivant une trajectoire, par l'intermédiaire d'une transmission telle que la courbe (II) représentative du coefficient démultiplicateur, qui est le rapport du couple de manoeuvre à un couple nominal, porté en ordonnées, en fonction de l'angle de rotation, porté en abscisses, est convexe et tourne sa convexité vers le haut, **caractérisé en ce que** le maximum du coefficient démultiplicateur est obtenu pour un angle compris entre 20 et 40°.

2. Mécanisme suivant la revendication 1, **caractérisé en ce que** l'organe se déplaçant suivant une trajectoire est un coulisseau (2) sur lequel est monté, guidé dans une direction non parallèle à la trajectoire, un patin (3) solidaire de la pièce (5) montée à poste fixe avec possibilité de tourner.

3. Mécanisme suivant la revendication 2, **caractérisé en ce que** le patin (3) est rendu solidaire de la pièce (5) par un bras (4) fixé à la pièce et articulé au patin (3).

4. Mécanisme suivant la revendication 2 ou 3, **caractérisé en ce que** la trajectoire et la direction sont perpendiculaires.

5. Mécanisme suivant la revendication 4, **caractérisé en ce que** le bras (4) fait, en une position d'extrémité, un angle de 20 à 40° avec la trajectoire.

6. Mécanisme suivant la revendication 1, **caractérisé en ce que** l'angle est compris entre 28 et 37°.

7. Procédé pour diminuer l'énergie à fournir nécessaire à la manoeuvre d'un obturateur de robinet pour le faire tourner sur soi-même d'un quart de tour, ayant un axe de sortie auquel on applique un couple par l'intermédiaire d'une transmission telle que la courbe (II) représentative du coefficient démultiplicateur, qui est le rapport du couple de manoeuvre à un couple nominal, porté en ordonnées, en fonction de l'angle de rotation, porté en abscisses, est convexe, en tournant sa convexité vers le haut **caractérisé en ce que** la courbe (II) a un maximum pour un angle compris entre 20 et 40°.

8. Procédé suivant la revendication 8, **caractérisé en ce que** l'angle est compris entre 28 et 37°.

## Patentansprüche

1. Vorrichtung zur Erlangung eines Betätigungsmomentes um die Achse (5) eines Drehbolzens einer Betätigungseinrichtung zum Öffnen und Schließen eines Ventils, um ihn um eine Vierteldrehung um sich selbst zu bewegen, von einem Vorrichtungsteil aus, dass sich längs einer Bahn bewegt, unter Zwischenschaltung einer Kraftübertragungseinrichtung, derart, dass die für den Untersetzungsgetriebekoeffizienten charakteristische Kurve II, die das Verhältnis des Betätigungsmomentes zu einem Nennmoment ist, dargestellt in Ordinatenrichtung als Funktion des in Abszissenrichtung aufgetragenen Drehwinkels, einen konvexen Verlauf aufweist, wobei die konvexe Auswölbung nach oben gerichtet ist, **dadurch gekennzeichnet, dass** das Maximum des Untersetzungsgetriebekoeffizienten bei einem Winkel zwischen 20° und 40° einschließlich erreicht wird.

2. Vorrichtung nach Anspruch 1, **dadurch gekennzeichnet, dass** das Vorrichtungsteil, das sich längs einer Bahn bewegt, eine Gleitführung (2) ist, in welcher, in einer zu der Bahn nicht parallelen Richtung, ein Gleitstück (3) geführt ist, das mit dem Drehbolzen (5), der ortsfest mit der Möglichkeit, sich zu drehen, angeordnet ist, verbunden ist.

3. Vorrichtung nach Anspruch 2, **dadurch gekennzeichnet, dass** das Gleitstück (3) mit dem Drehbolzen (5) durch einen Arm (4) verbunden ist, der an dem Drehbolzen befestigt und an dem Gleitstück (3) angelenkt ist.

4. Vorrichtung nach Anspruch 2, **dadurch gekennzeichnet, dass** die Bahn und die Richtung senkrecht zueinander verlaufen.

5. Vorrichtung nach Anspruch 4, **dadurch gekennzeichnet, dass** der Arm (4) in der einen Extremstellung einen Winkel von 20° bis 40° mit der Bahn bildet.

6. Vorrichtung nach Anspruch 1, **dadurch gekennzeichnet, dass** der Winkel zwischen 28° und 37° einschließlich liegt.

7. Verfahren zur Verminderung der zu liefernden Energie, die notwendig ist zur Betätigung einer Verschlussvorrichtung eines Ventils, um sie zu einer Vierteldrehung um sich selbst zu veranlassen, die einen Achsbolzen aufweist auf den ein Drehmoment ausgeübt wird unter Zwischenschaltung einer Kraftübertragungseinrichtung, derart, dass die für den Untersetzungsgetriebekoeffizienten charakteristische Kurve II, die das Verhältnis des Betätigungsmomentes zu einem Nennmoment darstellt, aufgetragen in Ordinatenrichtung als Funktion des auf der Abszissenachse dargestellten Drehwinkels, einen konvexen Verlauf aufweist, wobei die konvexe Auswölbung nach oben gerichtet ist, **dadurch gekennzeichnet, dass** die Kurve II ein Maximum bei einem Winkel zwischen 20° und 40° einschließlich hat.

8. Verfahren nach Anspruch 7, **dadurch gekennzeichnet, dass** der Winkel zwischen 28° und 37° einschließlich liegt.

## Claims

1. Mechanism for obtaining a couple for manoeuvring an output spindle of a stopvalve obturator to make it rotate on itself through a quarter turn, from a member moving along a trajectory, via a transmission such that the curve (II)representing the reduction coefficient, which is the ratio of the manoeuvring couple to a nominal couple, shown on the y axis, as a function of the angle of rotation, shown on the x axis, is convex and rotates its convexity upwards, **characterized in that** the peak coefficient of reduction is obtained for an angle comprised between 20 and 40°.

2. Mechanism according to claim 1, **characterized in that** the member moving along a trajectory is a slide (2) on which is mounted, guided in a direction not parallel to the trajectory, a shoe (3) integral with the output spindle (5) which is fixedly mounted but able to rotate.

3. Mechanism according to claim 2, **characterized in that** the shoe (3) is attached to the output spindle (5) by an arm (4) fixed to the spindle and articulated on the shoe (3).

4. Mechanism according to claim 2 or 3, **characterized in that** the trajectory and direction are perpendicular.

5. Mechanism according to claim 4, **characterized in that** the arm (4) forms an angle of 20 to 40° with the trajectory, in an end position.

6. Mechanism according to claim 1, **characterized in that** the angle is between 28 and 37 °.

7. Process for reducing the energy needed to be supplied in order to manoeuvre a stopvalve obturator to make it turn on itself through a quarter turn having an output spindle to which is applied through a transmission such a couple that the curve (II) representing the coefficient of reduction, which is the ratio of the manoeuvring couple to a nominal couple, shown on the y axis, as a function of the angle of rotation, shown on the x axis, is convex, with its convexity facing upwards **characterized in that** said curve (II) has a peak at an angle comprised between 20 and 40°.

8. Process according to claim 7, **characterized in that** the angle is between 28 and 37°.
